# DEMANDE DE BREVET EUROPEEN

(11) **EP 1 031 574 A1**
(43) Date de publication de la demande: **30.08.2000**
(21) Numéro de dépôt: 99103736.7
(22) Date de dépôt: 26.02.1999
(51) Int. Cl.: C07F 9/09, C08K 5/521, C08K 5/5333, C08G 65/335, C08G 59/14, C08G 18/38, C08G 18/50, C08G 18/67, C07F 9/40

(54) **Polyol phosphoré, oligomère dérivé de ce polyol phosphoré, polymère dérivé de cet oligomère, procédés pour leur préparation et utilisations de ceux-ci**

(71) Demandeur: UCB S.A., 1070 Bruxelles (BE)
(72) Inventeur: Van den Bergen, Hugues, 1000 Bruxelles (BE); Vanovervelt, Jean-Claude, 7548 Warchin (BE)
(74) Mandataire: Lechien, Monique

(57) **Abrégé**

La présente invention concerne un polyol phosphoré. L'invention concerne également un oligomère dérivé de ce polyol phosphoré ainsi que la composition contenant cet oligomère. L'invention concerne également un polymère dérivé de cet oligomère.

L'invention concerne également des procédés pour la préparation de ce polyol phosphoré, de cet oligomère, de ce polymère et de cette composition.

L'invention concerne également les utilisations de ce polyol phosphoré, de cet oligomère, de ce polymère et de cette composition. La composition est réticulable par irradiation et présente des propriétés retardateur de flamme.

## Description

La présente invention concerne un polyol phosphoré. L'invention concerne également un oligomère dérivé de ce polyol phosphoré ainsi que la composition contenant ce polyol phosphoré et la composition contenant cet oligomère. L'invention concerne également un polymère dérivé de cet oligomère.

L'invention concerne également des procédés pour la préparation de ce polyol phosphoré, de cet oligomère, de ce polymère et de cette composition. L'invention concerne également les utilisations de ce polyol phosphoré, de cet oligomère, de ce polymère et de ces compositions.

La composition qui contient le polyol phosphoré comme constituant, présente des propriétés retardateur de flamme. La composition qui contient l'oligomère, est réticulable par irradiation et présente également des propriétés retardateur de flamme.

L'industrie du revêtement est en permanence à la recherche de matériaux présentant une meilleure résistance aux agressions, et notamment à la flamme.

Par ailleurs, cette même industrie est aussi à la recherche de matériaux qui, tout en possédant la résistance améliorée ci-dessus, soient polymérisables sous forme de revêtement, en couche mince ou épaisse, en ayant recours soit au durcissement thermique soit à l'une des techniques d'irradiation telles que le rayonnement ultraviolet ou bien les radiations ionisantes telles que rayons gamma, rayons X ou faisceau d'électrons.

Des revêtements ayant des propriétés de retardateur de flamme ont déjà été obtenus par polymérisation de compositions contenant des oligomères comprenant du phosphore. Ainsi le brevet Etats-Unis 5,456,984 décrit une composition polymérisable par irradiation comprenant un oligomère terminé par des fonctions copolymérisables par irradiation, cet oligomère étant préparé à partir d'un polyisocyanate et d'un polyol contenant du phosphore sous la forme de phosphonate, l'oligomère réagissant avec un acrylate hydroxylé. Le procédé de préparation de la composition décrite n'est pas aisé, du fait que la préparation du polyol a lieu en présence d'un solvant et d'un catalyseur et qu'il est nécessaire d'éliminer l'eau (abrégé de la demande de brevet roumain 88-134852 ; et abrégé de la demande de brevet japonais 81-48905 ) ou l'éthanol, produit par distillation azéotropique ainsi que le solvant et le catalyseur par distillation sous vide durant un temps prolongé. De même, la préparation d'un autre polyol (brevet Etats-Unis 5,456,984) contenant du phosphore sous la forme de phosphate et phosphonate passe par l'utilisation d'oxydes d'alkylènes, dont les plus courants sont des gaz à pression atmosphérique, tel l'oxyde d'éthylène, et requiert donc une installation industrielle particulière comportant des réacteurs adaptés.

Par ailleurs, une résine contenant du phosphore a déjà été décrite [D. Derouet, F. Morvan et J.C. Brosse, Journal of Applied Polymer Science, vol. 62, 1855-1868 (1996)], cette résine a des propriétés ignifuges. Le procédé de préparation de cette résine comprend la réaction partielle entre un composé époxydé, le 4,4'-diglycidyléther de bisphénol-A, et un dialkylphosphate. La résine époxydée contenant du phosphore qui est ainsi préparée, est polymérisable par chauffage en présence d'un réticulant telle qu'une diamine (4,4'-diaminodiphénylsulfone) et conduit à une composition ayant des propriétés ignifuges. Cette résine n'est cependant pas polymérisable par irradiation et ne peut donc pas être appliquée sur les supports thermosensibles, tels que les tissus, le bois ou le papier. De plus, cette technique de polymérisation est coûteuse, d'une part, en énergie à cause du chauffage et, d'autre part, en temps, car la cinétique de polymérisation par chauffage est beaucoup plus lente que celle par irradiation. Enfin, un inconvénient majeur réside dans la faible teneur en phosphore de la résine, l'introduction du phosphore dans la résine époxydée se fait par l'ouverture de la fonction époxyde et diminue ainsi la concentration en fonctions époxydes nécessaire à la polymérisation.

Une demande existe donc pour un procédé simple et économique de préparation de composés de type polyols qui contiennent des atomes de phosphore utilisables comme matière première pour l'élaboration de composés plus complexes présentant des propriétés retardateurs de flamme.

A cet effet, l'invention fournit un procédé qui ne requiert la présence d'aucun solvant et d'aucun catalyseur. La séparation du produit final avec le solvant et le catalyseur n'est donc pas nécessaire. Il ne faut prévoir aucune étape de séparation et/ou de distillation. Ce procédé simple peut donc être mis en oeuvre à pression atmosphérique dans une installation industrielle standard. Il est donc particulièrement économique.

L'invention fournit une composition ayant des propriétés de retardateur de flamme notablement élevées, par le fait de sa teneur en phosphore. Cette composition est réticulable par irradiation et a des propriétés retardateur de flamme. La composition de l'invention peut être appliquée sur tout type de support, tel que notamment le bois, le textile, le papier et les matières plastiques, telles le polyéthylène et le polypropylène.

Les gaz émis lors de la combustion de la composition selon l'invention sont moins corrosifs que ceux émis lors de la combustion des compositions connues qui contiennent des halogènes et génèrent dès lors, lors de la combustion, des gaz corrosifs. Ces derniers, en plus de leurs propriétés toxiques, engendrent des dégâts importants aux composants électroniques, présents notamment dans les ordinateurs ce qui entraîne bien souvent la perte d'informations essentielles et des dégâts irréparables.

L'invention fournit une composition permettant d'obtenir un revêtement qui présente des propriétés retardateurs de flamme ainsi qu'une bonne résistance aux conditions extérieures.

De plus, l'invention fournit une composition contenant un (ou plusieurs) oligomère(s) ayant des groupements phosphorés pendants sur la chaîne de cet oligomère. Ceci présente l'avantage d'éviter une scission de la chaîne lors d'une éventuelle hydrolyse de ce groupement phosphoré et de minimiser ainsi l'impact sur les propriétés physico-chimiques et mécaniques du polymère obtenu après réticulation par irradiation de cette composition.

La présente invention remédie donc aux inconvénients des techniques connues.

A cet effet, la présente invention propose un nouveau polyol phosphoré contenant au moins deux groupes phosphates terminaux ou au moins deux groupes phosphonates terminaux ou au moins un groupe phosphate terminal et un groupe phosphonate terminal.

Par polyol, on entend un composé comportant au moins deux fonctions hydroxyles, non liés au même carbone.

Par groupe phosphate terminal, on entend un groupe de formule générale 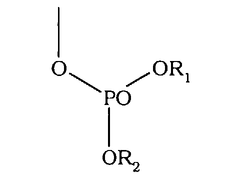 dans laquelle R₁ et R₂ représentent indépendamment un radical aliphatique, cycloaliphatique ou aromatique, substitué ou non, ayant de 1 à 16 atomes de carbone.

Les groupes phosphates peuvent être identiques ou différents, et de préférence, ils sont identiques. Les radicaux R₁ et R₂ peuvent être identiques ou différents, et de préférence ils sont identiques.

Par groupe phosphonate terminal, on entend un groupe de formule générale 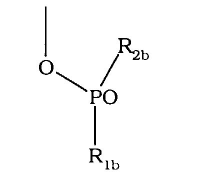 dans laquelle R_{1b} représente un radical hydroxyle, un radical oxyalkyle ou oxyaryle, substitué ou non, ayant de 1 à 16 atomes de carbone, ou un atome d'hydrogène ; et R_{2b} représente un radical aliphatique, cycloaliphatique ou aromatique, substitué ou non, ayant de 1 à 16 atomes de carbone.

Les groupes phosphonates peuvent être identiques ou différents et de préférence, ils sont identiques. Les radicaux R_{1b} et R_{2b} sont différents.

Habituellement, le polyol phosphoré de l'invention contient de 2 à 10 groupes phosphates ou phosphonates terminaux. De préférence, il contient 2 ou 8 groupes phosphates ou phosphonates terminaux. De bons résultats ont été obtenus lorsqu'il contient 2 groupes phosphates ou phosphonates terminaux.

Habituellement, le polyol phosphoré de l'invention est le produit de réaction d'au moins un polyoxirane et d'au moins un composé contenant du phosphore choisi parmi les esters de l'acide phosphorique, les esters de l'acide phosphonique, les acides phosphoniques et les acides phosphiniques.

Par ester de l'acide phosphorique, on entend un composé de formule générale (I): 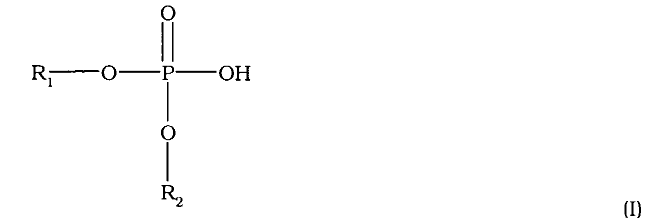 dans laquelle R₁ et R₂ représentent indépendamment un radical aliphatique, cycloaliphatique ou aromatique, substitué ou non, ayant de 1 à 16 atomes de carbone.

Généralement, dans la formule (I), R₁ et R₂ représentent indépendamment un radical aliphatique, cycloaliphatique ou aromatique, substitué ou non, ayant de 1 à 12 atomes de carbone.

De préférence, dans la formule (I), R₁ et R₂ représentent indépendamment un radical aliphatique, ayant de 1 à 10 atomes de carbone ou un radical phényle substitué ou non.

De bons résultats ont été obtenus lorsque, dans la formule (I), R₁ et R₂ représentent indépendamment un radical alkyle, linéaire ou branché, non substitué, ayant de 1 à 8 atomes de carbone, tels que notamment les radicaux méthyle, éthyle, propyle, iso-propyle, butyle normal primaire, butyle normal secondaire, iso-butyle, butyle tertiaire ou un radical phényle.

D'excellents résultats ont été obtenus lorsque R₁ et R₂ représentent un radical butyle normal primaire.

Par acide phosphonique et acide phosphinique, on entend un composé de formule générale (II): 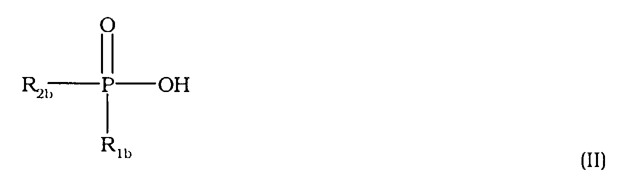 dans laquelle R_{1b} représente un radical hydroxyle, un radical oxyalkyle ou oxyaryle, substitué ou non, ayant de 1 à 16 atomes de carbone, ou un atome d'hydrogène; et R_{2b} représente un radical aliphatique, cycloaliphatique ou aromatique, substitué ou non, ayant de 1 à 16 atomes de carbone.

Généralement, dans la formule (II), R_{1b} représente un radical hydroxyle ou un atome d'hydrogène, et R_{2b} représente un radical aliphatique, cycloaliphatique ou aromatique. substitué ou non, ayant de 1 à 12 atomes de carbone.

De très bons résultats ont été obtenus lorsque, dans la formule (II), R_{1b} représente un atome d'hydrogène (acide phosphinique) ou un radical hydroxyle (acide phosphonique) et R_{2b} représente un radical phényle.

Par polyoxirane, on entend un composé comportant au moins deux radicaux oxirane, c'est à dire au moins deux radicaux époxydes, ou au moins deux radicaux oxétanyles, ou au moins un radical époxyde et au moins un radical oxétanyle. Les radicaux époxydes ou oxétanyles peuvent être terminaux ou internes. De préférence, ils sont terminaux. Le polyoxirane comportant au moins deux radicaux époxydes est nommé ci-après polyépoxyde et le polyoxirane comportant au moins deux radicaux oxétanyle est nommé ci-après polyoxétane.

Par radical époxyde, on entend un radical de formule générale:

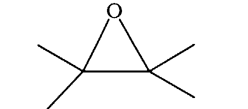

Par radical oxétanyle, on entend un radical de formule générale:

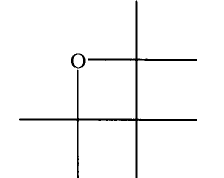

De préférence, le polyoxirane est un composé comportant au moins deux radicaux oxiranes. De manière préférée, le polyoxirane comporte de 2 à 5 radicaux oxiranes. De bons résultats ont été obtenus lorsqu'il comporte deux ou trois radicaux oxiranes. D'excellents résultats ont été obtenus lorsque le polyoxirane comporte deux radicaux époxydes, c'est à dire est un diépoxyde.

Généralement les polyépoxydes de l'invention sont des polyépoxydes aliphatiques, cycloaliphatiques ou aromatiques. Habituellement, ils sont choisis parmi les éthers de glycidyles aliphatiques, cycloaliphatiques ou aromatiques, les époxydes novolacs.

Les polyépoxydes aliphatiques ou cycloaliphatiques peuvent être saturés ou insaturés, linéaires ou branchés, substitués ou non. Ils peuvent être monomériques ou polymériques, liquides ou solides mais de préférence ils sont liquides à température ambiante.

Parmi les polyépoxydes aliphatiques, cycloaliphatiques ou aromatiques, les éthers de glycidyles convenant bien sont ceux obtenus par la réaction de l'épichlorohydrine avec un composé aliphatique, cycloaliphatique ou aromatique dihydroxylé. Par composé aliphatique, on entend de préférence un composé contenant des groupements alkylène linéaires ou branchés, saturés ou non. Par composé cycloaliphatique, on entend de préférence un composé aliphatique contenant une partie cyclique. Par composé aromatique, on entend de préférence un composé contenant des groupements arylènes substitués ou non. Ces définitions incluent les composés contenant des atomes d'oxygène.

Des exemples de polyépoxydes convenant bien répondent généralement à la formule générale (III) 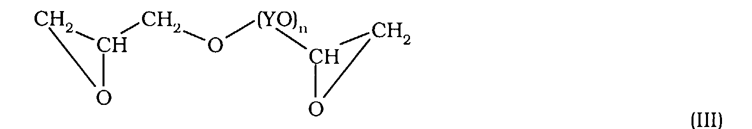 dans laquelle Y représente un groupement divalent choisi parmi les groupements aliphatiques, cycloaliphatiques, arylaliphatiques ou aryles, contenant de 2 à 80 atomes de carbone et pouvant éventuellement contenir des atomes d'oxygène, et n représente un nombre entier de 1 à 50. De préférence, Y représente un groupement divalent, alkylène, cycloalkylène ou arylène, contenant de 2 à 60 atomes de carbone et n représente un nombre entier de 2 à 20.

Des glycidyléthers aliphatiques convenant particulièrement bien sont notamment les glycidyléthers de polyalkylèneglycols, tels les glycidyléthers de polypropylène glycol et de polyéthylène glycol, et les glycidyléthers de polytétrahydrofurane.

De bons résultats ont été obtenus avec le diépoxyde de polypropylène glycol vendu par la société DOW sous la dénomination DER732 et un diépoxyde de polypropylène glycol vendu par la société DOW sous la dénomination DER736.

Des exemples de polyépoxydes convenant également bien répondent à la formule générale (IV) 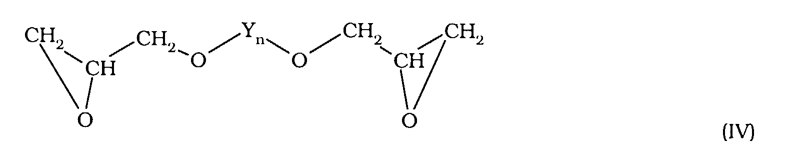 dans laquelle Y représente un groupement divalent choisi parmi les groupements aliphatiques, cycloaliphatiques, arylaliphatiques ou aryles, contenant de 2 à 80 atomes de carbone, et n représente un nombre entier de 1 à 50. De préférence, Y représente un groupement divalent, alkylène, cycloalkylène, ou arylène, contenant de 2 à 60 atomes de carbone, et n représente un nombre entier de 2 à 20.

Des exemples de glycidyléthers aliphatiques convenant particulièrement bien sont notamment les glycidyléthers de 1,4 butanediol, de néopentyl glycol, de cyclohexane diméthanol, du 1,2-éthanediol, du 1,6-hexanediol, les triglycidyléthers de triméthyloléthane et de triméthylolpropane. De bons résultats ont été obtenus avec un 1,4 butanedioldiglycidyléther vendu par la société SHELL Chemical Company sous la dénomination HELOXY Modifier 67.

D'autres exemples de glycidyléthers aliphatiques convenant bien sont notamment l'oxyde de polybutadiène, les huiles époxidées telle l'huile commercialisée sous la dénomination HELOXY Modifier 505 ("Castor Oil") par la société Shell Chemical Company, les polyglycidyléthers de glycérol oxypropylés tel le composé commercialisé sous la dénomination HELOXY Modifier 84 par la société Shell Chemical Company, les diglycidylesters d'acides carboxyliques tel le composé commercialisé sous la dénomination HELOXY Modifier 71 par la société Shell Chemical Company et repris dans la formule (V)

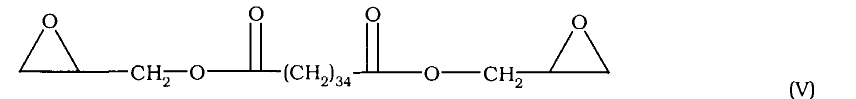

Des exemples de glycidyléthers aromatiques sont ceux obtenus à partir de phénols contenant deux groupements hydroxyles sont notamment 2,2-bis(4-hydroxyphényl) propane (bisphénol-A); 2,2-bis(4-hydroxy-3-tert-butylphényl)propane; 1,1-bis-(4-hydroxyphényl)éthane; 1,1-bis(4-hydroxyphényl)isobutane; bis(2-hydroxy-1-naphthyl)méthane; 1,5-dihydroxynaphthalène; 1,1-bis(4-hydroxy-3-alkylphényl)éthane; bisphénol-F; 1,2-dihydroxybenzène; 1,3-dihydroxybenzène (1,3-résorcinol); 1,4-dihydroxybenzène. D'autres exemples de glycidyléthers aromatiques sont le o-di-2,3-époxypropoxybenzène (1,2-diglycidyloxybenzène); le m-di-2,3-époxypropoxybenzène (1,3-diglycidyloxybenzène); le p-di-2,3-époxypropoxybenzène (1,4-diglycidyloxybenzène).

Des exemples de polyépoxydes aromatiques communément appelés phénols/crésols novolacs convenant également bien répondent à la formule générale (VI): 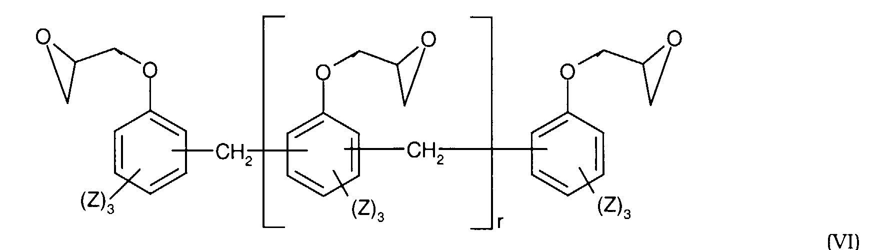 dans laquelle Z représente indépendamment un atome d'hydrogène ou un groupement alkyle, linéaire ou branché, contenant de 1 à 10 atomes de carbone et r est un nombre entier de 0 à 6.

Des exemples de glycidyléthers cycloaliphatiques convenant particulièrement bien sont notamment les diglycidyléthers de phénol hydrogéné contenant deux groupements hydroxyles tel le diglycidyléther de cyclohexanediméthanol.

Des exemples de polyépoxydes convenant également bien répondent à la formule générale (VII) ou (VIII): 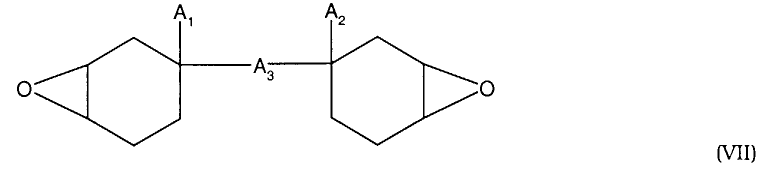 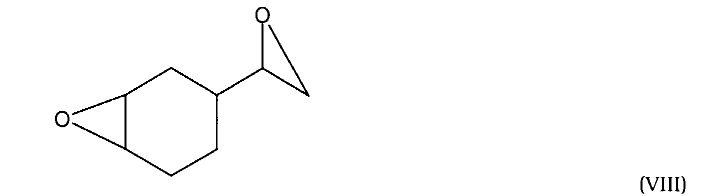 dans laquelle A₁ et A₂ représentent un atome d'hydrogène ou forment un cycle pouvant contenir éventuellement un ou des atomes d'oxygène, et A₃ représente un groupement aliphatique divalent contenant de 1 à 20 atomes de carbone et pouvant éventuellement contenir des groupements éther ou ester.

Des exemples de polyépoxydes comportant deux radicaux époxydes (diépoxydes) convenant bien sont notamment l'ester (3,4-époxycyclohexylméthylique de l'acide 3',4'-époxy-cyclohexane carboxylique: l'ester 3,4-époxytetrahydrobenzylique de l'acide 3',4'-époxytetrahydrobenzoique; l'ester 7'-oxabicyclo[4.1.0]hept-3'-ylméthylique de l'acide 7-oxabicyclo[4.1.0]heptane-3-carboxylique.

D'autres polyépoxydes qui sont bien connus de l'homme du métier, peuvent être choisis notamment parmi:
- les diépoxydes d'esters cycloaliphatiques d'acides dicarboxyliques tels que ceux de formule (IX) 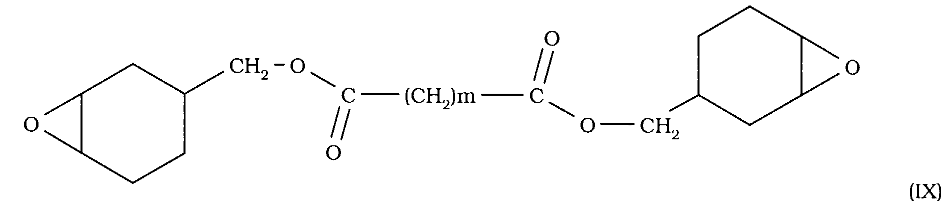 dans laquelle m est un nombre entier de 0 à 20 environ, de préférence de 1 à 6 et chacun des atomes de carbone des cycles aliphatiques peut porter un ou deux substituants de préférence hydrocarbonés et de préférence peu encombrés stériquement tels que des radicaux alkyles linéaires ayant de 1 à 9 atomes de carbone environ. Des exemples spécifiques de tels diépoxydes de formule (IX) sont les bis(3,4-époxycyclohexylméthyl)oxalate, bis(3,4-époxycyclohexylméthyl)adipate, et bis(3,4-époxycyclohexylméthyl)pimelate.
- les 3,4-époxycyclohexylméthyl-3,4-époxycyclohexane carboxylates de formule (X) 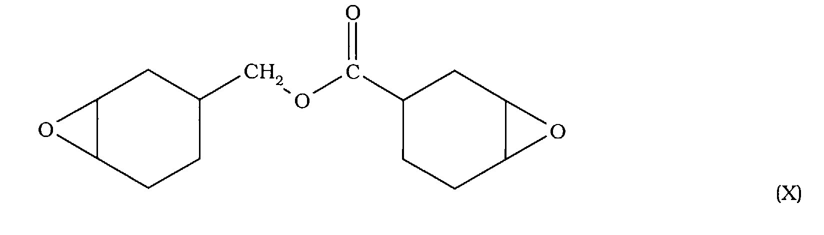 dans laquelle chacun des atomes de carbone des cycles aliphatiques peut porter un ou deux substituants de préférence hydrocarbonés et de préférence peu encombrés stériquement tels que des radicaux alkyles linéaires ayant de 1 à 9 atomes de carbone. Des exemples spécifiques de tels diépoxydes de formule (X) sont les 3,4-époxycyclohexylméthyl-3',4'-époxycyclohexane carboxylate, 3,4-époxy-1-méthylcyclohexylméthyl-3',4'-époxy-1'-méthylcyclohexane carboxylate, 6-méthyl-3,4-poxycyclohexylméthyl-6'-méthyl-3',4',-epoxycyclohexane carboxylate, 3,4-époxy-3-méthylcyclohexylméthyl-3',4'-époxy-3'-méthylcyclohexane carboxylate, 3,4-époxy-5-méthylcyclohexylméthyl-3',4'-époxy-5'-méthylcyclohexane carboxylate. Le diépoxyde répondant à la formule (X) sans substituant est commercialisé sous la dénomination UVACURE 1500 par la société UCB, S.A..
- les 3,4-époxycyclohexylméthyl-3,4-époxycyclohexane carboxylates de formule (XI): 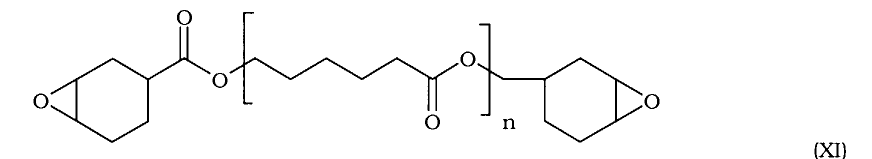 dans laquelle n représente un nombre entier de 1 à 30. Parmi ceux-ci, on peut citer le composé vendu sous la dénomination CELLOXIDE 2081 (dans lequel n est égal à 1), le composé vendu sous la dénomination CELLOXIDE 2083 (dans lequel n est égal à 3) et le composé vendu sous la dénomination CELLOXIDE 2085 (dans lequel n est égal à 5) commercialisés par la société DAICEL.

D'autres polyépoxydes peuvent être choisis tels que notamment le 1,2,5,6-diépoxy-4,7-méthano-perhydroindène, le 2-(3,4-époxycyclohexyl)-3',4'-époxy-1,3-dioxane-5-spirocyclohexane, le 1,2-éthylènedioxy-bis(3,4-époxycyclohexylméthane), le di-(2,3-époxycyclopentyl)éther, des diépoxycyclohexanes.

Les composés de formules (IX) à (XI), ainsi que les composés cités dans le paragraphe précédent, peuvent être préparés notamment selon l'enseignement de Crivello, J.V.; Lee, J.L.; J. Polym. Sci., Poly. Chem 1990, Vol. 28, 479-503 et Crivello, J.V. Adv. in Polym. Sci., 1984, 62, 1.

Parmi les composés de formules (IX) à (XI), les meilleurs résultats ont été obtenus avec les diépoxydes de formule (X) ou de formule (XI) sans substituant.

Des exemples de polyépoxydes convenant également bien sont les résines époxydées décrites dans la demande de brevet international WO 96/19516, et la demande de brevet international WO 96/19468 et également les polyépoxydes décrits la demande de brevet européen 0 139 042, le contenu de ces demandes, relatif aux résines époxydées, est incorporé par référence.

Des exemples de polyoxétanes convenant bien répondent à la formule générale (XII): 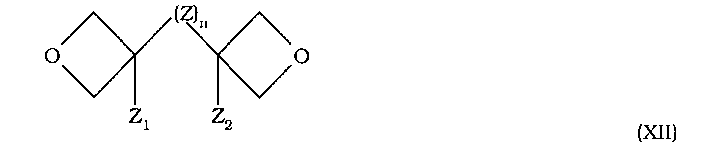 dans laquelle Z représente un radical divalent oxyalkyle, oxycycloalkyle, oxyaryle, oxyalkyle-oxyaryle, contenant de 1 à 50 atomes de carbone; n représente un nombre entier 1 à 30; et Z₁ et Z₂ représentent indépendamment un radical monovalent aliphatique, cycloaliphatique ou aromatique, un radical oxyalkyle, oxycycloalkyle, oxyaryle, oxyalkyle-oxyaryle, contenant de 1 à 50 atomes de carbone. Des exemples de polyoxétanes convenant bien sont ceux décrits dans la demande de brevet français 2 758 557, le contenu de cette demande est incorporé par référence.

De bons résultats ont été obtenus avec l'un de ces produits, le 1,4-Bis[(3-éthyl-3-oxétanylméthoxy)méthyl]benzène vendu par la société TOAGOSEI sous la dénomination XDO et répondant à la formule (XIII):

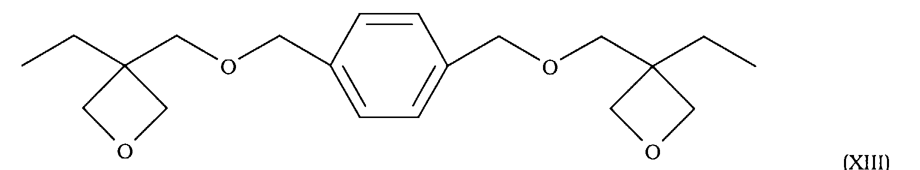

Selon un aspect préféré, le polyol phosphoré de l'invention répond à la formule générale (XIV) : 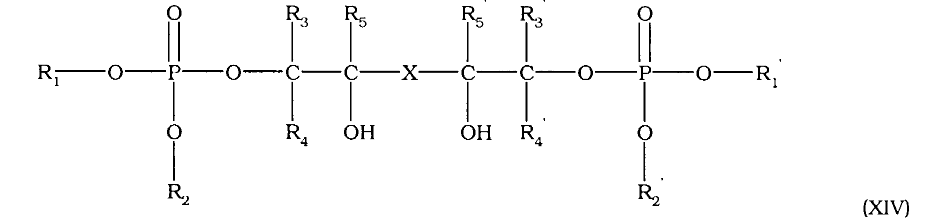 dans laquelle
- X représente un radical divalent, alkyle linéaire ou branché, cycloaliphatique ou aromatique, substitué ou non, ayant de 1 à 50 atomes de carbone et pouvant éventuellement contenir des atomes d'oxygène; ou X représente un groupement divalent de formule générale

   -X'- O - (X" - O )ₙ - X‴-

   dans laquelle n représente un nombre entier de 1 à 50 et X', X" et X"' représentent indépendamment un radical divalent, alkyle linéaire ou branché, cycloaliphatique ou aromatique, substitué ou non, ayant de 1 à 80 atomes de carbone;
- R₁, R₂, R₁' et R₂' représentent indépendamment un radical aliphatique, cycloaliphatique ou aromatique, substitué ou non, ayant de 1 à 16 atomes de carbone;
- R₃, R₄, R₃' et R₄' représentent indépendamment un atome d'hydrogène, un radical alkyle linéaire ou branché, cycloaliphatique ou aromatique, substitué ou non, ayant de 1 à 25 atomes de carbone; et
- R₅ et R₅' représentent indépendamment un atome d'hydrogène, un radical alkyle linéaire ou branché, cycloaliphatique ou aromatique, substitué ou non, ayant de 1 à 25 atomes de carbone.
Généralement, dans la formule (XIV),
- X représente un radical divalent, alkyle linéaire ou branché, cycloaliphatique ou aromatique, substitué ou non, ayant de 1 à 50 atomes de carbone et pouvant contenir éventuellement des atomes d'oxygène; ou X représente un groupement divalent de formule générale

   -X' - O - (X" - O )ₙ - X‴-

   dans laquelle n représente un nombre entier de 1 à 20 et X', X" et X‴ représentent indépendamment un radical divalent, alkyle linéaire ou branché, cycloaliphatique ou aromatique, substitué ou non, ayant de 1 à 60 atomes de carbone;
- R₁, R₂, R₁' et R₂' représentent indépendamment un radical aliphatique, cycloaliphatique ou aromatique, substitué ou non, ayant de 1 à 12 atomes de carbone;
- R₃, R₄, R₃' et R₄' représentent indépendamment un atome d'hydrogène, un radical alkyle linéaire ou branché, cycloaliphatique ou aromatique, substitué ou non, ayant de 1 à 20 atomes de carbone; et
- R₅ et R₅' représentent indépendamment un atome d'hydrogène, un radical alkyle linéaire ou branché, cycloaliphatique ou aromatique, substitué ou non, ayant de 1 à 20 atomes de carbone.
De préférence, dans la formule (XIV),
- X représente un groupement divalent de formule générale

   -X' - O - (X" - O )ₙ - X‴-

   dans laquelle n représente un nombre entier de 1 à 8, et X' et X‴ représentent le radical CH₂ et X" représente un radical divalent, alkyle linéaire ou branché, cycloaliphatique ou aromatique, substitué ou non, ayant de 1 à 12 atomes de carbone;
- R₁ et R₂, R₁' et R₂' représentent indépendamment un radical aliphatique, substitué ou non substitué, ayant de 1 à 10 atomes de carbone;
- R₃, R₄, R₃' et R₄' représentent indépendamment un atome d'hydrogène, un radical alkyle linéaire ou branché, non substitué, ayant de 1 à 15 atomes de carbone; et
- R₅ et R₅' représentent indépendamment un atome d'hydrogène, un radical alkyle linéaire ou branché, non substitué, ayant de 1 à 15 atomes de carbone.
De bons résultats ont été obtenus lorsque, dans la formule (XIV),
- X représente un groupement divalent de formule générale

   -X' - O - (X" - O )ₙ - X‴-

   dans laquelle n représente un nombre entier de 1 à 7, X' et X"' représentent le radical CH₂ et X" représente un radical divalent, alkyle linéaire ou branché, ou aryle, non substitué, ayant de 1 à 10 atomes de carbone;
- R₁, R₂, R₁' et R₂' représentent indépendamment un radical alkyle, linéaire ou branché, non substitué, ayant de 1 à 8 atomes de carbone, tels que notamment les radicaux méthyle, éthyle, propyle, iso-propyle, butyle normal primaire, butyle normal secondaire, iso-butyle, butyle tertiaire;
- R₃, R₄, R₃' et R₄' représentent indépendamment un atome d'hydrogène, un radical alkyle linéaire ou branché, non substitué, ayant de 1 à 5 atomes de carbone; et
- R₅ et R₅' représentent indépendamment un atome d'hydrogène, un radical alkyle linéaire ou branché, non substitué, ayant de 1 à 5 atomes de carbone.
D'excellents résultats ont été obtenus lorsque dans la formule (XIV),
- X représente un groupement divalent de formule générale

   -X'- O - (X" - O )ₙ - X‴-

   dans laquelle
   - n représente un nombre entier de 1 à 7,
   - X' et X‴ représentent le radical CH_{2,} et
   - X" représente un radical divalent, alkyle linéaire ou branché, non substitué, ayant de 1 à 10 atomes de carbone, tels que notamment les radicaux méthyle, éthyle, propyle, iso-propyle, butyle normal primaire, butyle normal secondaire, iso-butyle, butyle tertiaire ou un radical divalent phényle, non substitué;
- R₁, R₂, R₁' et R₂' représentent indépendamment un radical butyle normal primaire;
- R₃, R₄, R₃' et R₄' représentent un atome d'hydrogène et
- R₅ et R₅' représentent un atome d'hydrogène.

Selon un autre aspect préféré, le polyol phosphoré de l'invention répond à la formule générale (XV): 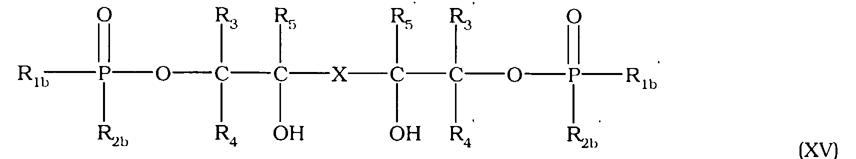 dans laquelle
- X représente un radical divalent, alkyle linéaire ou branché, cycloaliphatique ou aromatique, substitué ou non, ayant de 1 à 50 atomes de carbone et pouvant éventuellement contenir des atomes d'oxygène; ou X représente un groupement divalent de formule générale

   -X' - O - (X" - O )ₙ - X‴-

   dans laquelle n représente un nombre entier de 1 à 50 et X', X" et X‴ représentent indépendamment un radical divalent, alkyle linéaire ou branché, cycloaliphatique ou aromatique, substitué ou non, ayant de 1 à 80 atomes de carbone;
- R_{1b} et R_{1b}' représentent un radical hydroxyle, un radical de type oxyalkyl ou oxyaryle, substitué ou non, contenant de 1 à 16 atomes de carbone ou un atome d'hydrogène; et R_{2b} et R_{2b'} un radical aliphatique, cycloaliphatique ou aromatique, substitué ou non, ayant de 1 à 16 atomes de carbone;
- R₃, R₄, R₃' et R₄' représentent indépendamment un atome d'hydrogène, un radical alkyle linéaire ou branché, cycloaliphatique ou aromatique, substitué ou non, ayant de 1 à 25 atomes de carbone; et
- R₅ et R₅' représentent indépendamment un atome d'hydrogène, un radical alkyle linéaire ou branché, cycloaliphatique ou aromatique, substitué ou non, ayant de 1 à 25 atomes de carbone.
Généralement, dans la formule (XV),
- X représente un radical divalent, alkyle linéaire ou branché, cycloaliphatique ou aromatique, substitué ou non, ayant de 1 à 50 atomes de carbone et pouvant contenir éventuellement des atomes d'oxygène; ou X représente un groupement divalent de formule générale

   -X' - O - (X" - O )ₙ - X‴-

   dans laquelle n représente un nombre entier de 1 à 20 et X', X" et X‴ représentent indépendamment un radical divalent, alkyle linéaire ou branché, cycloaliphatique ou aromatique, substitué ou non, ayant de 1 à 60 atomes de carbone;
- R_{1b} et R_{1b}' représentent un radical hydroxyle, un radical de type oxyalkyl ou oxyaryle, substitué ou non, contenant de 1 à 16 atomes de carbone, ou un atome d'hydrogène; et R_{2b} et R_{2b'} un radical aliphatique, cycloaliphatique ou aromatique, substitué ou non, ayant de 1 à 16 atomes de carbone;
- R₃, R₄, R₃' et R₄' représentent indépendamment un atome d'hydrogène, un radical alkyle linéaire ou branché, cycloaliphatique ou aromatique, substitué ou non, ayant de 1 à 20 atomes de carbone; et
- R₅ et R₅' représentent indépendamment un atome d'hydrogène, un radical alkyle linéaire ou branché, cycloaliphatique ou aromatique, substitué ou non, ayant de 1 à 20 atomes de carbone.
De préférence, dans la formule (XV)
- X représente un groupement divalent de formule générale

   -X' - O - (X" - O)ₙ - X‴-

   dans laquelle n représente un nombre entier de 1 à 8, et X' et X‴ représentent le radical CH₂ et X" représente un radical divalent, alkyle linéaire ou branché, cycloaliphatique ou aromatique, substitué ou non, ayant de 1 à 12 atomes de carbone;
- R_{1b} et R_{1b}' représentent un radical hydroxyle, un radical de type oxyalkyl ou oxyaryle substitué ou non, contenant de 1 à 16 atomes de carbone ou un atome d'hydrogène; e R_{2b} et R_{2b'} un radical aliphatique, cycloaliphatique ou aromatique, substitué ou non, ayant de 1 à 16 atomes de carbone;
- R₃, R₄, R₃' et R₄' représentent indépendamment un atome d'hydrogène, un radical alkyle linéaire ou branché, non substitué, ayant de 1 à 15 atomes de carbone; et
- R₅ et R₅' représentent indépendamment un atome d'hydrogène, un radical alkyle linéaire ou branché, non substitué, ayant de 1 à 15 atomes de carbone.
De bons résultats ont été obtenus lorsque, dans la formule (XXVIII),
- X représente un groupement divalent de formule générale

   -X' - O - (X'' - O )ₙ - X‴-

   dans laquelle n représente un nombre entier de 1 à 7, X' et X"' représentent le radical CH₂ et X" représente un radical divalent, alkyle linéaire ou branché, ou aryle, non substitué, ayant de 1 à 10 atomes de carbone;
- R_{1b} et R_{1b}' représentent un radical hydroxyle ou un atome d'hydrogène, et R_{2b} et R_{2b'} représentent un radical aliphatique, cycloaliphatique ou aromatique, substitué ou non, ayant de 1 à 10 atomes de carbone;
- R₃, R₄, R₃' et R₄' représentent indépendamment un atome d'hydrogène, un radical alkyle linéaire ou branché, non substitué, ayant de 1 à 5 atomes de carbone; et
- R₅ et R₅' représentent indépendamment un atome d'hydrogène, un radical alkyle linéaire ou branché, non substitué, ayant de 1 à 5 atomes de carbone.
D'excellents résultats ont été obtenus lorsque dans la formule (XXVIII)
- X représente un groupement divalent de formule générale

   -X' - O - (X" - O)ₙ - X‴-

   dans laquelle
   - n représente un nombre entier de 1 à 7,
   - X' et X‴ représentent le radical CH₂ , et
   - X" représente un radical divalent, alkyle linéaire ou branché, non substitué, ayant de 1 à 10 atomes de carbone, tels que notamment les radicaux méthyle, éthyle, propyle, iso-propyle, butyle normal primaire, butyle normal secondaire, iso-butyle, butyle tertiaire ou un radical divalent phényle, non substitué;
- R_{1b} et R_{1b}' représentent un radical hydroxyle ou un atome d'hydrogène, et R_{2b} et R_{2b}' un radical phényle;
- R₃, R₄, R₃' et R₄' représentent un atome d'hydrogène et
- R₅ et R₅' représentent un atome d'hydrogène.

La présente invention concerne également un procédé de préparation du polyol phosphoré.

Un procédé de préparation comprend la réaction d'au moins un polyoxirane et d'au moins un composé contenant du phosphore choisi parmi les esters de l'acide phosphorique, les esters de l'acide phosphonique, les acides phosphoniques et les acides phosphiniques. Plusieurs polyoxiranes et/ou plusieurs composés contenant du phosphore peuvent être mis en oeuvre lors du procédé. De préférence, on met en oeuvre un polyoxirane et un composé comportant du phosphore.

Les polyoxiranes et les composés contenant du phosphore pouvant être mis en oeuvre dans le procédé selon l'invention ont été définis ci-dessus.

D'excellents résultats ont été obtenus lorsque le polyoxirane mis en oeuvre dans le procédé de l'invention est choisi parmi les diépoxydes de propylèneglycol, le glycidyléther du 1,4-butanediol, les diépoxydes de formule (X) ou (XI) vendus sous les dénominations UVACURE 1500 par la société UCB, S.A., Celloxide 2021P, Celloxide 2081, Celloxide 2083, ou Celloxide 2085 par DAICEL; le 1,4-bis[(3-éthyl-3-oxétanylméthoxy)méthyl]benzène commercialisé par TOAGOSEI sous la dénomination XDO; le diépoxyde aromatique (diglycidyl éther de bisphénol-A) vendu sous la dénomination EPIKOTE 828 par la société DOW Chemical; et les polyépoxydes cycloaliphatiques de formule générale (VI), tel que le crésol novolac vendu par la société DOW CHEMICAL sous la dénomination DEN 431.

D'excellents résultats ont été obtenus lorsque l'ester de l'acide phosphorique mis en oeuvre dans le procédé de l'invention est le dibutylphosphate.

D'excellents résultats ont été obtenus lorsque l'acide phosphonique mis en oeuvre dans le procédé de l'invention est l'acide phénylphosphonique.

D'excellents résultats ont été obtenus lorsque l'acide phosphinique mis en oeuvre dans le procédé de l'invention est l'acide phénylphosphinique.

Le rapport molaire entre le composé contenant du phosphore et le polyoxirane mis en oeuvre dans le procédé de l'invention dépend principalement du nombre de radicaux oxirane que comporte le polyoxirane. Au moins un équivalent de radical oxirane porté par le polyoxirane est mis en oeuvre par mole de composé contenant du phosphore. En général moins de 2 équivalents de radical oxirane sont mis en oeuvre. De préférence le nombre d'équivalent est compris entre 1 et 1,5. De manière particulièrement préférée il est voisin de 1.

La préparation du polyol phosphoré selon l'invention est effectuée normalement en l'absence de solvant. Toutefois, elle peut être réalisée en présence de solvant tels le toluène et le xylène. Néanmoins le solvant n'apportant pas d'avantage majeur, elle est effectuée de préférence en absence de solvant.

La préparation du polyol phosphoré selon l'invention est effectuée normalement en l'absence de catalyseur. Toutefois, elle peut être réalisée en présence de catalyseur, tels l'acide phosphorique ou leur esters aliphatiques ou aromatiques correspondants, les sels alcalins inorganiques (comme le carbonate de sodium), les sels organométalliques (tel l'octanoate de lithium), les sels d'ammonium tel le chlorure de benzyltriméthylammonium, les amines tertiaires telles la triéthylamine, la triéthanolamine, la dicyclooctadiamine, la N,N-diméthylaniline), l'hydroxyde de potassium, les oxydes ou hydroxydes de métaux divalents, les catalyseurs au chrome tel qu'un catalyseur commercialisé par la société AEROJET SOLID PROPULSION Company sous la dénomination AMC-2. Néanmoins, le catalyseur n'apportant pas d'avantage majeur, la préparation du polyol phosphoré est effectuée de préférence en absence de catalyseur.

La température réactionnelle pour la préparation du polyol phosphoré de l'invention est généralement comprise entre environ 20°C et 150°C. De préférence, elle est comprise entre environ 30 et 120°C. De manière particulièrement préférée, elle est comprise entre environ 50°C et 100°C. De bons résultats ont été obtenus avec une température réactionnelle comprise entre environ 60°C et 95°C.

La pression réactionnelle pour la préparation du polyol phosphoré de l'invention dépend de la nature des composants mis en oeuvre et notamment de l'état physique (gaz, liquide ou solide) du polyoxirane à la température réactionnelle. La plupart des polyoxiranes étant liquides ou des solides à pression atmosphérique et température ambiante, la pression utilisée est donc généralement identique à la pression atmosphérique.

Le degré d'avancement de la réaction peut être suivi par tout moyen connu, tel que notamment la mesure de l'indice d'acide, de l'indice époxy du milieu réactionnel ou l'utilisation de la RMN du proton ou du phosphore.

La présente invention concerne également l'utilisation du polyol phosphoré.

Le polyol phosphoré de l'invention peut être notamment utilisé comme additif pour l'élaboration de compositions retardateur de flamme. Il peut notamment être mis en oeuvre dans des compositions réticulables par irradiation.

Le polyol phosphoré de la présente invention peut être utilisé pour la préparation de polyuréthanes et particulièrement de polyuréthanes (méth)acrylates réticulables par irradiation.

A cet effet, la présente invention concerne également un oligomère qui est le produit de la réaction d'un polyol phosphoré, tel que défini ci-dessus, d'un polyisocyanate et d'un acrylate hydroxylé.

L'oligomère de l'invention est composé d'un polyol phosphoré et d'un polyisocyanate terminé par au moins un dérivé hydroxylé comportant une ou des insaturations. L'oligomère est donc un composé uréthane acrylate.

Par polyisocyanate, on entend un composé contenant au moins deux fonctions isocyanates (NCO) par molécule.

Généralement, on met en oeuvre un polyisocyanate organique, tel qu'un polyisocyanate aliphatique, cycloaliphatique ou aromatique. Comme exemples de diisocyanates aliphatiques appropriés, on peut mentionner le 1,4-diisocyanatobutane, 1,6-diisocyanatohexane, 1,6-diisocyanato-2,2,4-triméthylhexane et le 1,12-diisocyanatodécane. Les diisocyanates cycloaliphatiques appropriés comprennent les 1,3- et 1,4-diisocyanatocyclohexane, 2,4-diisocyanato-1-méthylcyclohexane, 1,3-diisocyanato-2-méthylcyclohexane, 1-isocyanato-2(isocyanatométhyl)cyclopentane, 1,1'-méthylènebis[4-isocyanatocyclohexane], 1,1'-(1-méthylèthylidéne)bis[4-isocyanatocyclohexane], 5-isocyanato-1-isocyanatométhyl-1,3,3-triméthylcyclohexane (diisocyanate d'isophorone), 1,3-et 1,4-bis(isocyanatométhyl)cyclohexane, 1,1'-méthylènebis[4-isocyanato-3-méthylcyclohexane], 1-isocyanato-4 (ou 3)-isocyanatométhyl-1-méthylcyclohexane, diisocyanate de dicyclohexylméthane. Les diisocyanates aromatiques particulièrement appropriés comprennent les toluène 2,4-diisocyanate, 1,4-diisocyanatobenzène, 1,1' - méthylènebis[4-isocyanatobenzène], 2,4-diisocyanato-1-méthylbenzène, 1,3-diisocyanato-2-méthylbenzène, 1,5-diisocyanatonaphtalène, 1,1' -(1-méthyléthylidène)bis[4-isocyanatobenzène], 1,3- et 1,4-bis(1-isocyanato-1-méthyléthyl)benzène, diisocyanate de diphénylméthane. Des polyisocyanates aromatiques ou aliphatiques contenant 3 groupes isocyanates ou plus peuvent aussi être utilisés, comme par exemple le 1,1',1"-méthylidynetris[4-isocyanatobenzène], le trimère de l'hexaméthylènediisocyanate et les polyisocyanates de polyphényl polyméthylène obtenus par phosgénation de condensats aniline/formaldéhyde.

De préférence, on met en oeuvre un diisocyanate. De manière particulièrement préférée, on met en oeuvre le diisocyanate de toluène, le diisocyanate d'isophorone, le diisocyanate de triméthylhexane, le diisocyanate de dicyclohexylméthane, le diisocyanate de diphénylméthane, le diisocyanate d'hexaméthylène, le diisocyanate de naphthalène, le diisocyanate de phénylène, le diisocyanate de diphényle. De bons résultats ont été obtenus avec le diisocyanate d'isophorone (IPDI).

Par acrylate hydroxylé, on entend un composé contenant au moins une fonction acrylate ou méthacrylate et au moins une fonction hydroxyle. Généralement, on met en oeuvre un acrylate monohydroxylé. Habituellement, on met en oeuvre l'hydroxyméthylacrylate, l'hydroxyéthylacrylate, l'hydroxypropylacrylate ou l'hydroxybutylacrylate. D'autres dérivés monohydroxylés insaturés peuvent également être utilisés, tels les analogues méthacrylates, vinyl éthers, allyl éthers, vinyl esters, itaconates, crotonates. De préférence, on met en oeuvre l'hydroxyéthylacrylate.

La réaction d'un polyisocyanate avec un polyol pour produire un oligomère contenant un groupement uréthane est bien connu de l'homme du métier. Il n'est donc pas nécessaire de décrire les conditions réactionnelles.

Selon un autre aspect, la présente invention concerne également un oligomère, produit de la réaction d'un polyol phosphoré, tel que défini ci-dessus, avec de l'acide acrylique ou de l'acide méthacrylique.

Cette réaction peut être réalisée par estérification ou transestérification selon des conditions réactionnelles qui sont bien connues de l'homme de métier.

La présente invention concerne également l'utilisation des oligomères décrits ci-dessus.

Ces oligomères peuvent être utilisés pour produire des polymères ayant des propriétés retardateur de flamme. A cet effet, la présente invention concerne également la polymérisation d'un oligomère tel que défini ci-dessus. En effet, compte tenu de l'existence de fonctions acrylates libres dans l'oligomère, celui-ci se prête bien à la polymérisation sous irradiation, sous ultra-violet, infra-rouge ou par bombardement d'électrons ou par la chaleur en présence ou non d'initiateurs thermiques basés sur les peroxydes ou les initiateurs de type azo (azobisisobutyronitrile). De préférence, la polymérisation de l'oligomère a lieu sous irradiation, sous ultra-violet ou par bombardement d'électrons. De bons résultats ont été obtenus avec une polymérisation sous irradiation.

La présente invention concerne également une composition réticulable par irradiation et ayant des propriétés retardateur de flamme. La composition comprend au moins un oligomère, tel que défini ci-dessus. La composition comprend éventuellement un ou des monomères réticulables par irradiation et éventuellement un photoinitiateur.

Par monomère, on entend un composé qui ne contient pas d'halogène et qui est polymérisable par irradiation. Habituellement, on met en oeuvre un monomère organique, contenant un groupement fonctionnel acrylique ou vinylique. Comme exemple de monomères appropriés, on peut citer les diéthylèneglycol diacrylate, tripropylène glycol diacrylate, hexanediol diacrylate, tetrahydrofurfuryl acrylate, méthoxyéthyl acrylate, éthoxyéthoxyéthyl acrylate, le triméthyloylpropane triacrylate, le pentaérythritoltriacrylate (PETIA). Habituellement, la composition contient de 0 à 60 % en poids de monomères réticulables par irradiation, de préférence de 25 à 45 %. La teneur en celui-ci est ajusté selon l'utilisation de la composition et selon la viscosité souhaitée pour l'application de la composition.

Si la composition doit être polymérisée par rayonnement ultraviolet, un photoinitiateur est de préférence ajouté. De nombreux photoinitiateurs sont déjà connus. Des photoinitiateurs appropriés sont notamment la 1-hydroxycyclohexylphénylcétone, un mélange de 2-hydroxy-2-méthyl-1-phényl-propane-1-one et de 2,4,6-triméthylbenzoyldiphénylphosphine oxyde.

La composition peut également contenir d'autres additifs, tels que des stabilisants, des plastifiants, des promoteurs d'adhésion, des agents de transfert de chaîne, des composés comportant des insaturations réticulables par irradiation pour ajuster la viscosité.

De préférence, la composition de l'invention est exempte d'halogène.

La présente invention concerne également l'utilisation de la composition décrite ci-dessus.

La composition de l'invention est appliquée sur n'importe quel support, tel que textile, fibre textile telle que les fibres cellulosiques; bois; fibre optique; métal, tel que fer, cuivre, aluminium, acier; verre; le papier et les matières plastiques telles le polyéthylène et le polypropylène.

Elle est mise en oeuvre comme revêtement ou enrobant ignifuge.

La composition de l'invention peut également être ajoutée à des peintures et à des adhésifs.

Par composition retardateur de flamme, on entend un échantillon qui soumit au test de l'index d'oxygène (« LOI: Limiting Oxygen Index « ) décrit par la norme (ASTM D 2863 ), présente un LOI supérieur à 20 %. Une matière possédant un index LOI supérieur à 20% est considérée comme brûlant lentement (« slow burning » ; index LOI compris entre 20% et 26%) ou auto-extinguible (« self-extinguishing» ; LOI > 27%) selon la publication M. Levin, S.M. Atlas, Eli M. Pearce, « Flame-Retardant Polymeric Materials », Eds., Plenum Press, New-York (1975), page 376. Tous les oligomères de l'invention présentent un LOI supérieur à 20% et répondent donc à la définition de matériaux possédant des propriétés retardateur de flamme.

Comme tenu de leur adhésion sur des supports très variés, les compositions polymérisées peuvent trouver de très nombreuses applications industrielles, telles que revêtements minces, épais ou semi-épais sur tous les supports précités. De plus, la composition contenant un polyol phosphoré qui est le produit de réaction d'un acide phosphonique et qui porte des groupements acides n'ayant pas réagi, présente de bonnes propriétés d'adhésion sur des supports métalliques.

Les polyols phosphorés et les oligomères selon l'invention sont quasiment incolores. Leur couleur mesurée selon la méthode Gardner est inférieure ou égale à 3 G, et généralement à 2 G. Ceci a comme avantage de ne quasiment pas influencer la couleur du support ou de la composition et de permettre l'obtention d'une bonne réactivité en réticulation par ultra-violet.

Les exemples suivants illustrent l'invention plus en détail.

### Exemple 1

Dans un réacteur de 2 litres à double enveloppe relié à un bain d'huile thermostatisé et muni d'un agitateur, on introduit 420 g (1,31 eq) de diépoxyde de polypropylène glycol (EW : 320 g/eq) vendu par la société DOW sous la dénomination DER 732. Le produit est chauffé à 70°C à pression atmosphérique.

Puis on introduit dans le réacteur via un jaugeur, 276 g (1.31 eq) de dibutylphosphate sous agitation sur une période d'une heure en maintenant la température à 70°C. A la fin de l'alimentation, le mélange est chauffé à 90°C pendant 3 heures. Ensuite, du diépoxyde DER 732 supplémentaire est ajouté par petites portions de manière à amener l'indice d'acide, mesuré selon la norme ASTM D 974-64, à une valeur inférieure à 10 mg KOH/g et d'amener l'indice époxy, mesuré selon la méthode ASTM E200 à une valeur inférieure à 0.5%.

Le polyol phosphoré obtenu a les propriétés suivantes. L'indice OH mesuré selon la méthode ASTM E222-73 est de 110 mg KOH/g, l'indice d'acide mesuré selon la méthode ASTM D974-64 est de 2,7 mg KOH/g, la valeur époxyde mesuré selon la méthode ASTM E200 est de 0,11 meq/g et la viscosité Hoppler (H, 25°C) est de 637 mPas, la couleur mesurée selon la méthode Gardner (ASTM D1544) est inférieure à 1 G.

### Exemple 2

Dans un réacteur de 2 litres à double enveloppe relié à un bain d'huile thermostatisé et muni d'un agitateur, on introduit 87 g d'isophorone diisocyanate (IPDI), 166 mg de ditertiobutylhydroquinone (DtBHQ), 166 mg de trinonylphenylphosphite (TNPP) et 332 mg de triphenylstibine (TFS).

Le mélange est chauffé à 40°C à pression atmosphérique. A cette température, 100 mg de dibutyldilaurate d'étain sont ajoutés au mélange et 200 g du polyol phosphoré synthétisé dans l'exemple 1 sont ajoutés via un jaugeur sur une période d'une heure en maintenant la température à environ 60°C.

Lorsque l'indice NCO mesuré selon la méthode ASTM D2572-87 est inférieur à 2,88 meq/g, on ajoute via un jaugeur un mélange de 45 g d'hydroxyéthylacrylate (HEA), 100 g d'hexanedioldiacrylate (HDDA) et 100 mg de dibutyldilaurate d'étain (DBTL) sur une période d'une heure en maintenant la température entre 60 et 70°C. A la fin de l'alimentation, on ajoute 332 mg de TFS et 166 mg de DtBHQ et le mélange est chauffé à 90°C jusqu'à ce que l'indice NCO mesuré selon la méthode ASTM D2572-87 soit inférieur à 0,15 %.

L'uréthane acrylate obtenu a les propriétés suivantes.

La viscosité Hoppler (H, 25°C) est de 2458 mPas, la couleur mesurée selon la méthode Gardner est inférieure à 1 G.

### Exemple 3

On opère comme décrit à l'exemple 1 mais en mettant en oeuvre 180 g (0,86 eq) de dibutylphosphate et 163 g (0,86 eq) de diépoxyde de polypropylène glycol (EW : 190 g/eq) (vendu par la société Dow sous la dénomination DER 736).

La réaction est réalisée par addition du dibutylphosphate au diépoxyde chauffé à 70°C, sous agitation. A la fin de l'addition le mélange réactionnel est chauffé à 90°C pendant 3 heures. Ensuite, du diépoxyde DER 736 supplémentaire est ajouté par petites portions de manière à amener l'indice d'acide, mesuré selon la norme ASTM D 974-64, à une valeur inférieure à 10 mg KOH/g et d'amener l'indice époxy, mesuré selon la méthode ASTM E200 à une valeur inférieure à 0,5%.

Le polyol obtenu a les propriétés suivantes.

L'indice OH mesuré selon la méthode ASTM E222-73 est de 147 mg KOH/g, l'indice d'acide mesuré selon la méthode ASTM D974-64 est de 6,44 mg KOH/g, la valeur époxyde mesurée selon la méthode ASTM E200 est de 0,5 % et la viscosité Hoppler (H, 25°C) est de 1680 mPas, la couleur mesurée selon la méthode Gardner est inférieure à 1 G.

### Exemple 4

Dans un réacteur de 2 litres à double enveloppe relié à un bain d'huile thermostatisé et muni d'un agitateur, on introduit 135 g d'isophorone diisocyanate (IPDI), 300 mg de ditertiobutylhydroquinone (DtBHQ), 300 mg de trinonylphenylphosphite (TNPP) et 600 mg de triphenylstibine (TFS).

Le mélange est chauffé à 40°C à pression atmosphérique. A cette température, 100 mg de dibutyldilaurate d'étain (DBTL) sont ajoutés au mélange et 233 g du polyol phosphoré synthétisé dans l'exemple 3 sont ajoutés via un jaugeur sur une période d'une heure en maintenant la température à environ 60°C.

Lorsque l'indice NCO mesuré selon la méthode ASTM D2572-87 est inférieur à 1,66 meq/g, on ajoute via un jaugeur un mélange de 70 g d'hydroxyéthylacrylate (HEA), 110 g d'hexanedioldiacrylate (HDDA), 100 mg de DBTL sur une période d'une heure en maintenant la température entre 60 et 70°C. A la fin de l'alimentation, on ajoute 600 mg de TFS et 300 mg de DtBHQ et le mélange est chauffé à 90°C jusqu'à ce que l'indice NCO mesuré selon la méthode ASTM D2572-87 soit inférieur à 0,15 %.

L'uréthane acrylate obtenu a les propriétés suivantes.

La viscosité Hoppler mesurée (H, 25°C) est de 3000 mPas, la couleur mesurée selon la méthode Gardner est inférieure à 3 G.

L'uréthane acrylate est appliqué sur divers substrats à l'aide d'un filmographe. Les propriétés des films formés sont testées.

Un film d'une épaisseur de 150 µm est obtenu par bombardement d'électrons (durcissement « electron beam : EB » (réactivité 2 Mrad, 250 keV ; substrat : plaque inox). Il présente les propriétés suivantes : l'index « acetone double rubs » est supérieur à 100 (substrat : papier); la dureté Persoz (oscillations) est voisine de 43 (substrat : verre). Ce film possède un indice LOI de 23,0 à 23,3 % mesuré selon la norme ASTM D 2863-91.

Un film d'une épaisseur de 100 µm est obtenu par durcissement ultra-violet (UV) (lampe mercure pression moyenne; 80 Watt/cm) en présence de 4% de photoinitiateur (produit vendu sous la dénomination Irgacure 500 par la firme CIBA). Il présente les propriétés suivantes: réactivité 10 mètres/min («cure speed»; substrat papier) et 5 mètres/min («talc speed»; substrat: papier); l'index «acetone double rubs» est supérieur à 100 (substrat: papier); la dureté Persoz (oscillations) est voisine de 97 (substrat: verre).

### Exemple 5

On opère comme décrit à l'exemple 1 mais en mettant en oeuvre 230 g (1,10 eq) de dibutylphosphate et 140 g (1,10 eq) de 1,4 butanedioldiglycidylether (EW : 127 g/eq) (vendu par la société SHELL sous la dénomination HELOXY 67).

L'indice OH mesuré selon la méthode ASTM E222-73 est de 179 mg KOH/g, l'indice d'acide mesuré selon la méthode ASTM D974-64 est de 5,7 mg KOH/g, la valeur époxyde mesurée selon la méthode ASTM E200 est inférieure à 0,01 meq/g et la viscosité Hoppler (H, 25°C) est de 2020 mPas, la couleur mesurée selon la méthode Gardner est inférieure à 1 G.

### Exemple 6

Dans un réacteur de 2 litres à double enveloppe relié à un bain d'huile thermostatisé et muni d'un agitateur, on introduit 177 g d'isophorone diisocyanate (IPDI), 300 mg de ditertiobutylhydroquinone (DtBHQ), 300 mg de trinonylphenylphosphite (TNPP) et 600 mg de triphenylstibine (TFS).

Le mélange est chauffé à 40°C à pression atmosphérique. A cette température, 100 mg de dibutyldilaurate d'étain sont ajoutés au mélange et 250 g du polyol phosphoré synthétisé dans l'exemple 5 sont ajoutés via un jaugeur sur une période d'une heure en maintenant la température à environ 60°C.

Lorsque l'indice NCO mesuré selon la méthode ASTM D2572-87 est inférieur à 1,87 meq/g, on ajoute via un jaugeur un mélange de 93 g d'hydroxyéthylacrylate (HEA), 155 g d'hexanedioldiacrylate (HDDA) et 100 mg de DBTL sur une période d'une heure en maintenant la température entre 60 et 70°C.

A la fin de l'alimentation, on ajoute 600 mg de TFS et 300 mg de DtBHQ et le mélange est chauffé à 90°C jusqu'à ce que l'indice NCO mesuré selon la méthode ASTM D2572-87 soit inférieur à 0,15 %.

L'uréthane acrylate obtenu a les propriétés suivantes. La viscosité Hoppler (H, 25°C) est de 6600 mPas, la couleur mesurée selon la méthode Gardner est inférieure à 3 G.

### Exemple 7

On opère comme décrit à l'exemple 1, mais en mettant en oeuvre 758 g (3,61 eq) de dibutylphosphate et 460 g (3,61 eq) de diépoxyde cycloaliphatique (127 g/eq) fabriqué par DAICEL et vendu par UCB S.A. sous la marque UVACURE 1500 ou Celloxide 2021 P.

La réaction est réalisée par addition du dibutylphosphate au diépoxyde chauffé à 70°C, sous agitation. La température est ensuite portée et maintenue à 90°C jusqu'à ce que l'indice d'acide, mesuré selon la norme ASTM D 974-64, soit inférieur à 5 mg KOH/g et que l'indice epoxy soit inférieur à 0,5 %.

Le polyol phosphoré obtenu a les propriétés suivantes. L'indice OH mesuré selon la méthode ASTM E222-73 est de 116 mg KOH/g, l'indice d'acide mesuré selon la méthode ASTM D974-64 est de 10 mg KOH/g, la valeur époxyde mesurée selon la méthode ASTM E200 est inférieure à 0,05 meq/g et la viscosité Hoppler (H, 25°C) est de 17750 mPas, la couleur mesurée selon la méthode Gardner est inférieure à 1 G.

### Exemple 8

Dans un réacteur de 2 litres à double enveloppe relié à un bain d'huile thermostatisé et muni d'un agitateur, on introduit 222 g d'isophorone diisocyanate (IPDI), 500 mg de ditertiobutylhydroquinone (DtBHQ), 500 mg de trinonylphenylphosphite (TNPP) et 1 g de triphenylstibine (TFS).

Le mélange est chauffé à 40°C à pression atmosphérique. A cette température, 150 mg de dibutyldilaurate d'étain sont ajoutés au mélange et 485 g du polyol phosphoré synthétisé dans l'exemple 7 sont ajoutés via un jaugeur sur une période d'une heure en maintenant la température à environ 60°C.

Lorsque l'indice NCO mesuré selon la méthode ASTM D2572-87 est inférieur à 1,45 meq/g, on ajoute via un jaugeur un mélange de 116 g d'hydroxyéthylacrylate (HEA), 245 g d'hexanedioldiacrylate (HDDA) et 150 mg de DBTL sur une période d'une heure en maintenant la température entre 60 et 70°C.

A la fin de l'alimentation, on ajoute 1 g de TFS et 500 mg de DtBHQ et le mélange est chauffé à 90°C jusqu'à ce que l'indice NCO mesuré selon la méthode ASTM D2572-87 soit inférieur à 0,15 %.

L'uréthane acrylate obtenu a les propriétés suivantes. La viscosité Hoppler (H, 25°C) est de 11800 mPas, la couleur mesurée selon la méthode Gardner est inférieure à 1 G.

L'uréthane acrylate est appliqué sur divers substrats à l'aide d'un filmographe. Les propriétés des films formés sont testées.

Un film d'une épaisseur de 150 µm est obtenu par bombardement d'électrons (« EB ») (réactivité 2 Mrad, 250 keV ; substrat : plaque inox). Il présente les propriétés suivantes : l'index « acetone double rubs » est supérieur à 100 (substrat : papier); la dureté Persoz (oscillations) est voisine de 97 (substrat : verre).

Un film d'une épaisseur de 100 µm est obtenu par durcissement ultra-violet (UV) (lampe mercure pression moyenne; 80 Watt/cm ) en présence de 4 % de photoinitiateur (produit vendu sous la dénomination Irgacure 500 par la firme CIBA). Il présente les propriétés suivantes : réactivité 5 mètres/min (« cure speed » ; substrat papier) et 5 mètres/min (« talc speed » ; substrat : papier); l'index « acetone double rubs » est supérieur à 100 (substrat : papier); la dureté Persoz (oscillations) est voisine de 63 (substrat : verre).

### Exemple 9

On opère comme décrit à l'exemple 1, mais en mettant en oeuvre 420 g (2 eq) de dibutylphosphate et 366 g (2 eq) de diépoxyde cycloaliphatique (183 g/eq) vendu par DAICEL sous le nom Celloxide 2081.

La réaction est réalisée par addition du dibutylphosphate au diépoxyde chauffé à 70°C, sous agitation. A la fin de l'addition le mélange réactionnel est chauffé à 90°C pendant 3 heures ; ensuite du diépoxyde supplémentaire est ajouté par petites portions de manière à amener l'indice d'acide, mesuré selon la norme ASTM D 974-64, à une valeur inférieure à 10 mg KOH/g et d'amener l'indice époxy, mesuré selon la méthode ASTM E200 à une valeur inférieure à 0,5%.

L'indice OH mesuré selon la méthode ASTM E222-73 est de 107 mg KOH/g, l'indice d'acide mesuré selon la méthode ASTM D974-64 est de 4,6 mg KOH/g, la valeur époxyde mesurée selon la méthode ASTM E200 est inférieure à 0,02 meq/g et la viscosité Hoppler (H, 25°C) est de 8500 mPas, la couleur mesurée selon la méthode Gardner est inférieure à 1 G.

### Exemple 10

Dans un réacteur de 2 litres à double enveloppe relié à un bain d'huile thermostatisé et muni d'un agitateur, on introduit 222 g d'isophorone diisocyanate (IPDI), 500 mg de ditertiobutylhydroquinone (DtBHQ), 500 mg de trinonylphenylphosphite (TNPP) et 1 g de triphenylstibine (TFS).

Le mélange est chauffé à 40°C à pression atmosphérique. A cette température, 150 mg de dibutyldilaurate d'étain sont ajoutés au mélange et 524 g du polyol phosphoré synthétisé dans l'exemple 9 est ajouté via un jaugeur sur une période d'une heure en maintenant la température à environ 60°C.

Lorsque l'indice NCO mesuré selon la méthode ASTM D2572-87 est inférieur à 1,35 meq/g, on ajoute via un jaugeur un mélange de 116 g d'hydroxyéthylacrylate (HEA), 192 g d'hexanedioldiacrylate (HDDA) et 100 mg de DBTL sur une période d'une heure en maintenant la température entre 60 et 70°C.

A la fin de l'alimentation, on ajoute 1 g de TFS et 500 mg de DtBHQ et le mélange est chauffé à 90°C jusqu'à ce que l'indice NCO mesuré selon la méthode ASTM D2572-87 soit inférieur à 0,15 %.

L'uréthane acrylate obtenu a les propriétés suivantes. La viscosité Hoppler (H, 25°C) est de 13200 mPas, la couleur mesurée selon la méthode Gardner est inférieure à 1 G.

### Exemple 11

On opère comme décrit à l'exemple 1, mais en mettant en oeuvre 420 g de dibutylphosphate et 609 g diépoxyde cycloaliphatique (297 g/eq) vendu par DAICEL sous le nom Celloxide 2083.

L'indice OH mesuré selon la méthode ASTM E222-73 est de 80 mg KOH/g, l'indice d'acide mesuré selon la méthode ASTM D974-64 est de 1,98 mg KOH/g, la valeur époxyde mesurée selon la méthode ASTM E200 est inférieure à 0,02 meq/g et la viscosité Hoppler (H, 25°C) est de 12800 mPas, la couleur mesurée selon la méthode Gardner est inférieure à 1 G.

### Exemple 12

Dans un réacteur de 2 litres à double enveloppe relié à un bain d'huile thermostatisé et muni d'un agitateur, on introduit 83 g d'isophorone diisocyanate (IPDI), 250 mg de ditertiobutylhydroquinone (DtBHQ), 250 mg de trinonylphenylphosphite (TNPP) et 500 mg de triphenylstibine (TFS).

Le mélange est chauffé à 40°C à pression atmosphérique. A cette température, 70 mg de dibutyldilaurate d'étain sont ajoutés au mélange et 263 g du polyol phosphoré synthétisé dans l'exemple 11 est ajouté via un jaugeur sur une période d'une heure en maintenant la température à environ 60°C.

Lorsque l'indice NCO mesuré selon la méthode ASTM D2572-87 est inférieur à 1,10 meq/g, on ajoute via un jaugeur un mélange de 44 g d'hydroxyéthylacrylate (HEA), 98 g d'hexanedioldiacrylate (HDDA) et 70 mg de DBTL sur une période d'une heure en maintenant la température entre 60 et 70°C. A la fin de l'alimentation, on ajoute 500 mg de TFS et 250 mg de DtBHQ et le mélange est chauffé à 90°C jusqu'à ce que l'indice NCO mesuré selon la méthode ASTM D2572-87 soit inférieur à 0,15 %.

L'uréthane acrylate obtenu a les propriétés suivantes. La viscosité Hoppler (H, 25°C) est de 4800 mPas, la couleur mesurée selon la méthode Gardner est inférieure à 1 G.

### Exemple 13

On opère comme décrit à l'exemple 1, mais en mettant en oeuvre 79 g (0,38 eq) de dibutylphosphate et 156 g de diépoxyde cycloaliphatique (411 g/eq) vendu par DAICEL sous le nom Celloxide 2085.

Le polyol phosphoré obtenu a les propriétés suivantes. L'indice OH mesuré selon la méthode ASTM E222-73 est de 67 mg KOH/g, l'indice d'acide mesuré selon la méthode ASTM D974-64 est de 2,2 mg KOH/g, la valeur époxyde mesurée selon la méthode ASTM E200 est inférieure à 0,05 meq/g. Le produit est solide à température ambiante, la couleur mesurée selon la méthode Gardner est inférieure à 1 G.

### Exemple 14

Dans un réacteur de 2 litres à double enveloppe relié à un bain d'huile thermostatisé et muni d'un agitateur, on introduit 55 g d'isophorone diisocyanate (IPDI), 250 mg de ditertiobutylhydroquinone (DtBHQ), 250 mg de trinonylphenylphosphite (TNPP) et 500 mg de triphenylstibine (TFS).

Le mélange est chauffé à 40°C à pression atmosphérique. A cette température, 70 mg de dibutyldilaurate d'étain sont ajoutés au mélange et 300 g du polyol phosphoré synthétisé dans l'exemple 13 est ajouté via un jaugeur sur une période d'une heure en maintenant la température à environ 60°C.

Lorsque l'indice NCO mesuré selon la méthode ASTM D2572-87 est inférieur à 0,70 meq/g, on ajoute via un jaugeur un mélange de 29 g d'hydroxyéthylacrylate (HEA), 128 g d'hexanedioldiacrylate (HDDA) et 70 mg de DBTL sur une période d'une heure en maintenant la température entre 60 et 70°C. A la fin de l'alimentation, on ajoute 500 mg de TFS et 250 mg de DtBHQ et le mélange est chauffé à 90°C jusqu'à ce que l'indice NCO mesuré selon la méthode ASTM D2572-87 soit inférieur à 0,15 %.

L'uréthane acrylate obtenu a les propriétés suivantes. La viscosité Hoppler (H, 25°C) est de 1400 mPas, la couleur mesurée selon la méthode Gardner est inférieure à 1 G.

### Exemple 15

On opère comme décrit à l'exemple 1, mais en mettant en oeuvre 430 g (2,05 eq) de dibutylphosphate et 342 g (2,05 eq) du dioxétane :
1,4-Bis[(3-éthyl-3-oxétanylméthoxy)méthyl]benzène (EW : 167 g/eq) vendu par la société TOAGOSEI sous la dénomination XDO.

L'indice OH mesuré selon la méthode ASTM E222-73 est de 139 mg KOH/g, l'indice d'acide mesuré selon la méthode ASTM D974-64 est de 11,1 mg KOH/g, la valeur oxétane mesurée par analogie selon la méthode ASTM E200 est inférieure à 0,10 meq/g et la viscosité Hoppler (H, 25°C) est de 2400 mPas, la couleur mesurée selon la méthode Gardner est inférieure à 1 G.

### Exemple 16

Dans un réacteur de 2 litres à double enveloppe relié à un bain d'huile thermostatisé et muni d'un agitateur, on introduit 166 g d'isophorone diisocyanate (IPDI), 500 mg de ditertiobutylhydroquinone (DtBHQ), 500 mg de trinonylphenylphosphite (TNPP) et 1 g de triphenylstibine (TFS).

Le mélange est chauffé à 40°C à pression atmosphérique. A cette température, 150 mg de dibutyldilaurate d'étain sont ajoutés au mélange et 302 g du polyol phosphoré synthétisé dans l'exemple 15 sont ajoutés via un jaugeur sur une période d'une heure en maintenant la température à environ 60°C.

Lorsque l'indice NCO mesuré selon la méthode ASTM D2572-87 est inférieur à 1,60 meq/g, on ajoute via un jaugeur un mélange de 87 g d'hydroxyéthylacrylate (HEA), 139 g d'hexanedioldiacrylate (HDDA) et 150 mg de DBTL sur une période d'une heure en maintenant la température entre 60 et 70°C.

A la fin de l'alimentation, on ajoute 1 g de TFS et 500 mg de DtBHQ et le mélange est chauffé à 90°C jusqu'à ce que l'indice NCO mesuré selon la méthode ASTM D2572-87 soit inférieur à 0,15 %.

L'uréthane acrylate obtenu a les propriétés suivantes. La viscosité Hoppler (H, 25°C) est de 13900 mPas, la couleur mesurée selon la méthode Gardner est inférieure à 1 G.

### Exemple 17

On opère comme décrit à l'exemple 1 mais en mettant en oeuvre 420 g (2,0 eq) de dibutylphosphate et 425 (2.0 eq) de diépoxyde aromatique (diglycidyl éther de bisphénol-A) (EW 200 g/eq) vendu sous la dénomination EPIKOTE 828 par la société DOW.

Le polyol phosphoré obtenu a les propriétés suivantes. L'indice OH mesuré selon la méthode ASTM E222-73 est de 166 mg KOH/g, l'indice d'acide mesuré selon la méthode ASTM D974-64 est de 8,0 mg KOH/g, la valeur époxyde mesurée selon la méthode ASTM E200 est inférieure à 0,10 meq/g. La viscosité Hoppler (H, 25°C) est de 230 000 mPas, la couleur mesurée selon la méthode Gardner est inférieure à 1 G.

### Exemple 18

Dans un réacteur de 2 litres à double enveloppe relié à un bain d'huile thermostatisé et muni d'un agitateur, on introduit 222 g d'isophorone diisocyanate (IPDI), 500 mg de ditertiobutylhydroquinone (DtBHQ), 500 mg de trinonylphenylphosphite (TNPP) et 1 g de triphenylstibine (TFS).

Le mélange est chauffé à 40°C à pression atmosphérique. A cette température, 150 mg de dibutyldilaurate d'étain (DBTL) sont ajoutés au mélange et 339 g du polyol phosphoré synthétisé dans l'exemple 17 sont ajoutés via un jaugeur sur une période d'une heure en maintenant la température à environ 60°C.

Lorsque l'indice NCO mesuré selon la méthode ASTM D2572-87 est inférieur à 1,8 meq/g, on ajoute via un jaugeur un mélange de 120 g d'hydroxyéthylacrylate (HEA), 225 g d'hexanedioldiacrylate (HDDA), 150 mg de DBTL sur une période d'une heure en maintenant la température entre 60 et 70°C. A la fin de l'alimentation, on ajoute 1 g de TFS et 150 mg de DtBHQ et le mélange est chauffé à 90°C jusqu'à ce que l'indice NCO mesuré selon la méthode ASTM D2572-87 soit inférieur à 0,15 %.

L'uréthane acrylate obtenu a les propriétés suivantes.

La viscosité Hoppler mesurée (H, 25°C) est de 3 100 mPas, la couleur mesurée selon la méthode Gardner est inférieure à 1 G.

### Exemple 19

Dans un réacteur de 2 litres à double enveloppe relié à un bain d'huile thermostatisé, et muni d'un agitateur, on introduit 262 g (1,5 eq) de crésol novolac (EW: 175 g/eq) vendu par la société DOW Chemical sous la dénomination DEN 431, et 316 g d'hexanedioldiacrylate. Le produit est chauffé à 100°C à pression atmosphérique.

Puis on introduit dans le réacteur via un jaugeur, un mélange de 158 g (0,75 eq) de dibutylphosphate, 54 g (0,75 eq) d'acide acrylique, 1,2 g d'AMC-2 comme catalyseur et 600 mg d'hydroquinone, sous agitation, sur une période d'une heure en maintenant la température du mélange réactionnel inférieure à 110°C. L'injection d'air dans le réacteur est maintenue au cours de la réaction. A la fin de l'addition, le mélange réactionnel est maintenu à 110°C pendant 3 heures. Ensuite, du crésol novolac supplémentaire est ajouté par petites portions de manière à amener l'indice d'acide, mesuré selon la norme ASTM D 974-64, à une valeur inférieure à 10 mg KOH/g et d'amener l'indice époxyde, mesuré selon la méthode ASTM E200 à une valeur inférieure à 0,5%.

Le polyol phosphoré obtenu a les propriétés suivantes. L'indice OH mesuré selon la méthode ASTM E222-73 est de 130 mg KOH/g, l'indice d'acide mesuré selon la méthode ASTM D974-64 est de 4,5 mg KOH/g, la valeur époxyde mesuré selon la méthode ASTM E200 est de 0,10 meq/g et la viscosité Hoppler (H, 25°C) est de 1 375 mPas, la couleur mesurée selon la méthode Gardner est inférieure à 1 G.

### Exemple 20

Dans un réacteur de 2 litres à double enveloppe relié à un bain d'huile thermostatisé et muni d'un agitateur, on introduit 285 g (1,5 eq) de diépoxyde de polypropylène glycol (EW: 190 g/eq) vendu par la société DOW sous la dénomination DER 736 et 237 g (1,5 mol ; 3 eq) d'acide phénylphosphonique. Le mélange est lentement chauffé juqu'à l'observation d'un exotherme, à la suite duquel le mélange est porté à 90°C jusqu'à ce que l'indice d'acide, mesuré selon la norme ASTM D 974-64, soit inférieur à 162 mg KOH/g et que l'indice époxy, mesuré selon la norme ASTM E200, soit inférieur à 0,5 %. Le mélange est ensuite dilué avec 440 g d'hexanedioldiacrylate (HDDA).

Le polyol phosphoré obtenu a les propriétés suivantes. L'indice OH ne peut pas être mesuré selon la méthode ASTM E222-73 à cause de la présence de groupes acides (il peut être estimé par calcul: 161 mg KOH/g), l'indice d'acide mesuré selon la méthode ASTM D974-64 est de 158 mg KOH/g, la valeur époxyde mesuré selon la méthode ASTM E200 est inférieure à 0,01 meq/g. Le produit est solide à température ambiante, la couleur mesurée selon la méthode Gardner est inférieure à 3 G.

### Exemple 21

Dans un réacteur de 2 litres à double enveloppe relié à un bain d'huile thermostatisé et muni d'un agitateur, on introduit 285 g de diépoxyde de polypropylène glycol (EW : 190 g/eq) vendu par la société DOW sous la dénomination DER 736 et 213 g (1,5 mol ; 1,5 eq) d'acide phénylphosphinique. Le mélange est lentement chauffé juqu'à l'observation d'un exotherme, à la suite duquel le mélange est porté à 90°C pendant 3 heures. Ensuite, du diépoxyde supplémentaire est ajouté par petites portions de manière à amener l'indice d'acide, mesuré selon la norme ASTM D 974-64, à une valeur inférieure à 10 mg KOH/g et d'amener l'indice époxyde, mesuré selon la méthode ASTM E200 à une valeur inférieure à 0,5%.

Le polyol phosphoré obtenu a les propriétés suivantes. L'indice OH selon la méthode ASTM E222-73 et l'indice d'acide selon la méthode ASTM D974-64 ne peuvent pas être mesurés à cause de la présence de groupes acides. Néanmoins, ces valeurs peuvent être estimées par calcul. La valeur époxyde mesurée selon la méthode ASTM E200 est inférieure à 0,01 meq/g. Le produit est très visceux à température ambiante, la couleur mesurée selon la méthode Gardner est inférieure à 1 G.

## Revendications

1. Polyol phosphoré contenant au moins deux groupes phosphates terminaux ou au moins deux groupes phosphonates terminaux ou au moins un groupe phosphate terminal et un groupe phosphonate terminal.

2. Polyol phosphoré selon la revendication 1, caractérisé en ce qu'il est le produit de réaction d'au moins un polyoxirane et d'au moins un composé contenant du phosphore choisi parmi les esters de l'acide phosphorique, les esters de l'acide phosphonique, les acides phosphoniques et les acides phosphiniques.

3. Polyol phosphoré selon la revendication 2, caractérisé en ce que le polyoxirane est choisi parmi les diépoxydes de polypropylène glycol, le glycidyléther du 1,4 butanediol; les diépoxydes de formule (X) ou (XI); le 1,4-bis[(3-éthyl-3-oxétanylméthoxy)méthyl]benzène; le diglycidyl éther de bisphénol-A; et les polyépoxydes cycloaliphatiques de formule générale (VI), tel que le crésol novolac;
et que le composé contenant du phosphore est choisi parmi le dibutylphosphate, l'acide phénylphosphonique et l'acide phénylphosphinique.

4. Polyol phosphoré selon la revendication 2, caractérisé en ce qu'il répond à la formule générale (XIV): 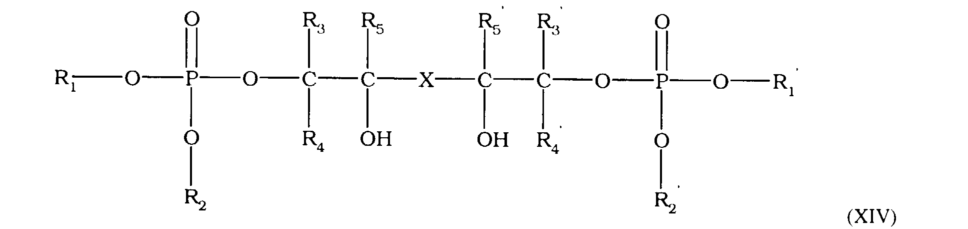 dans laquelle
- X représente un radical divalent, alkyle linéaire ou branché, cycloaliphatique ou aromatique, substitué ou non, ayant de 1 à 50 atomes de carbone et pouvant éventuellement contenir des atomes d'oxygène; ou X représente un groupement divalent de formule générale
-X' - O - (X" - O )ₙ - X‴-
dans laquelle n représente un nombre entier de 1 à 50 et X', X" et X"' représentent indépendamment un radical divalent, alkyle linéaire ou branché, cycloaliphatique ou aromatique, substitué ou non, ayant de 1 à 80 atomes de carbone;
- R₁, R₂, R₁' et R₂' représentent indépendamment un radical aliphatique, cycloaliphatique ou aromatique, substitué ou non, ayant de 1 à 16 atomes de carbone;
- R₃, R₄, R₃' et R4' représentent indépendamment un atome d'hydrogène, un radical alkyle linéaire ou branché, cycloaliphatique ou aromatique, substitué ou non, ayant de 1 à 25 atomes de carbone; et
- R₅ et R₅' représentent indépendamment un atome d'hydrogène, un radical alkyle linéaire ou branché, cycloaliphatique ou aromatique, substitué ou non, ayant de 1 à 25 atomes de carbone.

5. Polyol phosphoré selon la revendication 2, caractérisé en ce qu'il répond à la formule générale (XV): 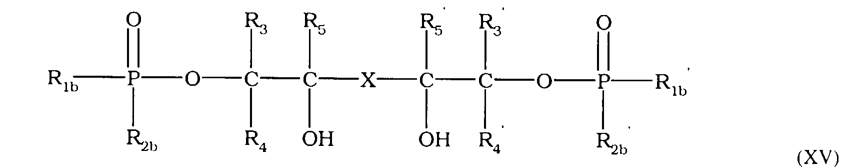 dans laquelle
- X représente un radical divalent, alkyle linéaire ou branché, cycloaliphatique ou aromatique, substitué ou non, ayant de 1 à 50 atomes de carbone et pouvant éventuellement contenir des atomes d'oxygène; ou X représente un groupement divalent de formule générale
-X' - O - (X" - O)ₙ - X‴-
dans laquelle n représente un nombre entier de 1 à 50 et X', X" et X"' représentent indépendamment un radical divalent, alkyle linéaire ou branché, cycloaliphatique ou aromatique, substitué ou non, ayant de 1 à 80 atomes de carbone;
- R_{1b} et R_{1b}' représentent un radical hydroxyle, un radical de type oxyalkyl ou oxyaryle, substitué ou non, contenant de 1 à 16 atomes de carbone ou un atome d'hydrogène; et R_{2b} et R_{2b}' un radical aliphatique, cycloaliphatique ou aromatique, substitué ou non, ayant de 1 à 16 atomes de carbone;
- R₃, R4, R₃' et R4' représentent indépendamment un atome d'hydrogène, un radical alkyle linéaire ou branché, cycloaliphatique ou aromatique, substitué ou non, ayant de 1 à 25 atomes de carbone; et
- R₅ et R₅' représentent indépendamment un atome d'hydrogène, un radical alkyle linéaire ou branché, cycloaliphatique ou aromatique, substitué ou non, ayant de 1 à 25 atomes de carbone.

6. Procédé de préparation du polyol phosphoré selon l'une quelconque des revendications précédentes, caractérisé en ce qu'il comprend la réaction d'au moins un polyoxirane et d'au moins un composé contenant du phosphore choisi parmi les esters de l'acide phosphorique, les esters de l'acide phosphonique, les acides phosphoniques et les acides phosphiniques.

7. Procédé selon la revendication 6, caractérisé en ce qu'au moins un équivalent de radical oxirane porté par le polyoxirane est mis en oeuvre par mole de composé contenant du phosphore.

8. Utilisation d'un polyol phosphoré selon l'une quelconque des revendications 1 à 5 comme additif dans une composition réticulable par irradiation.

9. Oligomère caractérisé en ce qu'il est le produit de la réaction d'un polyol phosphoré selon l'une des revendications 1 à 5, d'un polyisocyanate et d'un acrylate hydroxylé.

10. Oligomère caractérisé en ce qu'il est le produit de la réaction d'un polyol phosphoré selon l'une des revendications 1 à 5, et de l'acide acrylique ou de l'acide méthacrylique.

11. Polymère caractérisé en ce qu'il obtenu par polymérisation d'un oligomère selon la revendication 9 ou 10, sous irradiation.

12. Composition comprenant un oligomère selon la revendication 9 ou 10 ou un polymère selon la revendication 11, et un monomère réticulable par irradiation.

13. Utilisation d'un polyol phosphoré selon la revendication 1 à 5, d'un oligomère selon la revendication 8 ou 9, d'un polymère selon la revendication 10 ou d'une composition selon la revendication 11 dans un revêtement, un mélange, une composition retardateur de flamme.
